(19)

Europäisches
Patentamt
European
Patent Office
Office européen
des brevets

(11) **EP 4 497 790 A2**

(12) **EUROPEAN PATENT APPLICATION**

(43) Date of publication:
**29.01.2025 Bulletin 2025/05**

(51) International Patent Classification (IPC):
**C09D 11/10** (2014.01)        **C09D 11/102** (2014.01)
**C09D 11/107** (2014.01)        **C09D 11/12** (2006.01)
**C09D 11/322** (2014.01)        **C09D 11/38** (2014.01)

(21) Application number: **24190970.4**

(22) Date of filing: **25.07.2024**

(52) Cooperative Patent Classification (CPC):
**C09D 11/102; C09D 11/10; C09D 11/107;
C09D 11/12; C09D 11/322; C09D 11/38**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **26.07.2023 JP 2023121708**

(71) Applicant: **Brother Kogyo Kabushiki Kaisha
Nagoya, Aichi 467-8561 (JP)**

(72) Inventors:
• **IGUCHI, Makito
Nagoya, 467-8562 (JP)**
• **TANAKA, Hiroyuki
Nagoya, 467-8562 (JP)**
• **YUHARA, Keisuke
Nagoya, 467-8562 (JP)**

(74) Representative: **Prüfer & Partner mbB
Patentanwälte · Rechtsanwälte
Sohnckestraße 12
81479 München (DE)**

(54) **RESIN COMPOSITION, AQUEOUS INK, INK JET RECORDING DEVICE, AND INK JET RECORDING METHOD**

(57)    A resin composition includes: an organic solvent; fixing resin particles; lubricant particles; and water. The lubricant particles each contain an organic compound, a difference $(d_1-d_2)$ between a volume average particle diameter $(d_1)$ of the lubricant particles and a volume average particle diameter $(d_2)$ of the fixing resin particles is 70 nm or more. The organic solvent includes an organic solvent having a boiling point of 190°C to 280°C. In a total weight of the resin composition, a content of the lubricant particles is 0.1 wt% to 8.0 wt%, and a content of the organic solvent having a boiling point of 190°C to 280°C is 6.0 wt% to 10.0 wt%.

## FIGURE 1

EP 4 497 790 A2

**Description**

REFERENCE TO RELATED APPLICATIONS

This application claims priority from Japanese Patent Application No. 2023-121708 filed on July 26, 2023. The entire content of the priority application is incorporated herein by reference.

BACKGROUND ART

The present disclosure relates to a resin composition, an aqueous ink, an inkjet recording device, and an inkjet recording method.

In recent years, there has been a demand for low temperature drying for a printed matter from the viewpoint of reducing an environmental impact. In order to sufficiently form a film on a printing surface at a low temperature, it is necessary to use a film forming auxiliary. JP2019-147892A discloses an aqueous ink that uses an organic solvent such as glycerin as a film forming auxiliary.

SUMMARY

According to an aspect of the present disclosure, a resin composition includes: an organic solvent; fixing resin particles; lubricant particles; and water. The lubricant particles each contain an organic compound, a difference ($d_1$-$d_2$) between a volume average particle diameter ($d_1$) of the lubricant particles and a volume average particle diameter ($d_2$) of the fixing resin particles is 70 nm or more. The organic solvent includes an organic solvent having a boiling point of 190°C to 280°C. In a total weight of the resin composition, a content of the lubricant particles is 0.1 wt% to 8.0 wt%, and a content of the organic solvent having a boiling point of 190°C to 280°C is 6.0 wt% to 10.0 wt%.

According to another aspect of the present disclosure, an aqueous ink includes: the above-described resin composition; and a pigment.

According to a further aspect of the present disclosure, an ink jet recording device includes: the above-described resin composition or aqueous ink; a flow path through which the resin composition or aqueous ink flows; and an applying unit connecting to the flow path and configured to apply the resin composition or aqueous ink onto an object for recording.

According to a further aspect of the present disclosure, an ink jet recording method includes: applying the above-described resin composition or aqueous ink onto a recording medium by an inkjet method.

According to a further aspect of the present disclosure, an ink jet recording method includes: a recording step of performing recording by applying a resin composition to a recording medium by an ink jet method, in which the resin composition is the above-described resin composition.

According to a further aspect of the present disclosure, an ink jet recording method includes: a recording step of performing recording by applying an aqueous ink to a recording medium by an inkjet method, in which the aqueous ink is the above-described aqueous ink for ink jet recording.

BRIEF DESCRIPTION OF DRAWINGS

A more complete appreciation of the disclosure and many of the attendant advantages thereof will be readily obtained as the same becomes better understood by reference to the following detailed description when considered in connection with the accompanying drawings. Figure is a schematic diagram showing a configuration of an example of an ink jet recording device according to the present disclosure.

DESCRIPTION

In the case of using a film forming auxiliary, blocking is likely to occur due to a decrease in Tg or the like. Particularly in the case of using a roll-to-roll (R to R) method as a printing method, since a printing surface comes into contact with an opposite surface during winding, the occurrence of blocking is a major problem. In addition, in the case of using a film forming auxiliary, the scratch resistance of the printing surface may decrease.

According to embodiments of the present disclosure, a resin composition, an aqueous ink for ink jet recording, an inkjet recording device, and an inkjet recording method, which enable excellent blocking resistance and excellent scratch resistance, are provided.

As used herein, the words "a" and "an" and the like carry the meaning of "one or more." When an amount, concentration, or other value or parameter is given as a range, and/or its description includes a list of upper and lower values, this is to be understood as specifically disclosing all integers and fractions within the given range, and all ranges formed from any pair of any upper and lower values, regardless of whether subranges are separately disclosed. Where a range of numerical values is recited herein, unless otherwise stated, the range is intended to include the endpoints thereof, as well as all integers and fractions within the range. As an example, a stated range of 1-10 fully describes and includes the independent subrange 3.4 - 7.2 as does the following list of values: 1, 4, 6, 10.

In the present disclosure, "mass" may be referred to as "weight" unless otherwise specified. For example, "mass ratio" may be referred to as "weight ratio" unless otherwise specified, and "mass%" may be referred to as "wt%" unless otherwise specified.

In the present disclosure, "HSP" means a "Hansen solubility parameter" unless otherwise specified.

In the present disclosure, "RED" means a relative energy difference between a Hansen sphere radius ($R_0$) and a HSP distance ($R_a$) unless otherwise specified.

In the present disclosure, "blocking" refers to a phenomenon in which stacked printed matters adhere to each other due to the tackiness of the ink unless otherwise specified.

A resin composition according to the present disclosure will be described. The resin composition according to the present disclosure contains an organic solvent, fixing resin particles, lubricant particles, and water.

The organic solvent includes an organic solvent having a boiling point of 190°C to 280°C (hereinafter sometimes referred to as an "organic solvent A"). The organic solvent A is not particularly limited as long as it is an organic solvent having a boiling point of 190°C to 280°C, and may be, for example, an organic solvent having a boiling point of 200°C or higher, 210°C or higher, 220°C or higher, 230°C or higher, 240°C or higher, 250°C or higher, 260°C or higher, or 270°C or higher, or may be, for example, an organic solvent having a boiling point of 279°C or lower or 278°C or lower. Examples of the organic solvent A include a glycol and a glycol ether, and a glycol ether is preferred from the viewpoint of improving the scratch resistance to be described later. Examples of the glycol include tripropylene glycol (TPG), ethylene glycol, diethylene glycol, polyethylene glycol 200, polyethylene glycol 400, polyethylene glycol 600, and dipropylene glycol. Examples of the glycol ether include triethylene glycol monobutyl ether (BTG), ethylene glycol monobutyl propylene glycol monophenyl ether, diethylene glycol monomethyl ether, diethylene glycol monoethyl ether, diethylene glycol monobutyl ether, triethylene glycol monoethyl ether, triethylene glycol monomethyl ether, dipropylene glycol methyl ether, dipropylene glycol butyl ether, and tripropylene glycol butyl ether. The organic solvent A may be used alone or in combination of two or more types thereof. The organic solvent may or may not contain, for example, an organic solvent other than the organic solvent A.

A content of the organic solvent A is 6.0 wt% or more and 10.0 wt% or less, that is, 6.0 wt% to 10.0, wt% in a total weight of the resin composition. The content of the organic solvent A may be, for example, 6.5 wt% or more, 7.0 wt% or more, or 7.5 wt% or more, and for example, 9.5 wt% or less, 9.0 wt% or less, 8.5 wt% or less, or 8.0 wt% or less.

The fixing resin particles may be contained in, for example, a resin emulsion. Examples of the resin emulsion include an acrylic resin emulsion and a urethane resin emulsion. The resin emulsion is formed by, for example, the fixing resin particles and a dispersion medium (for example, water), and the fixing resin particles are not dissolved in the dispersion medium, but are dispersed in a specific particle diameter. For example, a commercially available product may be used as the fixing resin particles. In the case where the fixing resin particles are an acrylic resin emulsion, the fixing resin particles are not particularly limited as long as they are a resin emulsion having an acrylic component in the molecule, and are, for example, resin particles containing a polyacrylic acid or a polyacrylic acid ester as a main component. Examples of a monomer that can be used as the resin particles include (meth)acrylic acid and a (meth)acrylic acid ester such as methyl (meth)acrylate, ethyl (meth)acrylate, propyl (meth)acrylate, isopropyl (meth)acrylate, n-butyl (meth)acrylate, isobutyl (meth)acrylate, tert-butyl (meth)acrylate, pentyl (meth)acrylate, 2-ethylhexyl (meth)acrylate, octyl (meth)acrylate, cyclopropyl (meth)acrylate, cyclopentyl (meth)acrylate, cyclohexyl (meth)acrylate, cycloheptyl (meth)acrylate, cyclooctyl (meth)acrylate, phenyl (meth)acrylate, benzyl (meth)acrylate, tolyl (meth)acrylate, tisilyl (meth)acrylate, and phenethyl (meth)acrylate. Note that, in the present disclosure, the term "(meth) acrylic" means "at least one of acrylic and methacrylic". The term "(meth)acrylic acid" means "at least one of acrylic acid and methacrylic acid". The term "(meth)acrylate" means "at least one of acrylate and methacrylate". In the case where the fixing resin particles are a urethane resin emulsion, the fixing resin particles are not particularly limited as long as they are a resin emulsion having a urethane component in the molecule, and examples thereof include a polyether-based urethane, a polyester-based urethane, and a polycarbonate-based urethane.

A volume average particle diameter ($d_2$) of the fixing resin particles is not particularly limited, and may be, for example, 10 nm or more, 30 nm or more, 50 nm or more, or 70 nm or more, and may be, for example, 1000 nm or less, 500 nm or less, 300 nm or less, or 150 nm or less. The volume average particle diameter ($d_2$) can be measured using, for example, a dynamic light scattering particle size distribution measuring device. The dynamic light scattering particle size distribution measuring device is not particularly limited, and for example, "LB-550 (trade name)" manufactured by HORIBA Company can be used.

A glass transition temperature Tg of the fixing resin particles may be, for example, 35°C or higher, 45°C or higher, or 55°C or higher, and may be, for example, 80°C or lower, 70°C or lower, or 60°C or lower.

The lubricant particles contain an organic compound. Note that, in the present disclosure, the term "organic compound" refers to a general term for compounds containing carbon unless otherwise specified. However, carbon oxides, carbonates, and the like are included in inorganic compounds rather than the organic compound in the present disclosure. In the case where the lubricant particles contain an organic compound, the blocking resistance to be described later is improved. The lubricant particles may be, for example, an organic compound. The lubricant particles may include, for example, a hydrophilic portion and a hydrophobic portion. The lubricant particles may be contained in, for example, a resin emulsion. The resin emulsion is formed of, for example, the lubricant particles and a dispersion medium (for example, water), and the lubricant particles are not dissolved in the dispersion medium, but are dispersed with a specific particle diameter. For example, a commercially available product may be used as the lubricant particles. Examples of the resin emulsion include a silicone acrylic emulsion, a silicone urethane emulsion, a polyolefin emulsion, a paraffin emulsion, an acrylic emulsion, a polyurethane emulsion, a polyester emulsion, a vinyl chloride emulsion, and a vinyl acetate emulsion. From the viewpoint of improving the scratch resistance to be described later, a silicone acrylic emulsion and a silicone urethane emulsion are preferred. The lubricant particles may contain, for example, a polyorganosiloxane as a main chain. In addition, the lubricant particles may contain, for example, at least one of an acrylic component and a urethane component as a side chain. Examples of the lubricant particles include silicone acrylic particles, silicone urethane particles, polyolefin particles, paraffin particles, acrylic particles, polyurethane particles, polyester particles, and polyvinyl chloride particles. Examples of the lubricant particles include: "CHALINE (registered trademark) E-370", "CHALINE (registered trademark) E-790", and "CHALINE (registered trademark) RU-911" manufactured by Nissin Chemical Industry Co., Ltd.; and "SYMAC (registered trademark) US-450" and "SYMAC (registered trademark) US-480" manufactured by TOAGOSEI CO., LTD. The lubricant particles may be used alone or in combination of two or more types thereof.

A content of the lubricant particles is 0.1 wt% or more and 8.0 wt% or less, that is, 0.1 wt% to 8.0, wt% in the total weight of the resin composition. The content of the lubricant particles may be, for example, 0.15 wt% or more, 0.2 wt% or more, 0.5 wt% or more, or 1.0 wt% or more, and may be, for example, 7.0 wt% or less, 6.0 wt% or less, 5.0 wt% or less, 4.0 wt% or less, 3.0 wt% or less, or 2.0 wt% or less.

A volume average particle diameter ($d_1$) of the lubricant particles is not particularly limited, and may be, for example, 50 nm or more, 100 nm or more, 150 nm or more, or 200 nm or more, and may be, for example, 2000 nm or less, 1500 nm or less, 1000 nm or less, 800 nm or less, 500 nm or less, or 300 nm or less. The volume average particle diameter ($d_1$) can be measured using, for example, a dynamic light scattering particle size distribution measuring device. The dynamic light scattering particle size distribution measuring device is not particularly limited, and for example, "LB-550 (trade name)" manufactured by HORIBA Company can be used.

A difference ($d_1$-$d_2$) between the volume average particle diameter ($d_1$) of the lubricant particles and the volume average particle diameter ($d_2$) of the fixing resin particles is 70 nm or more. The difference ($d_1$-$d_2$) may be, for example, 80 nm or more, 90 nm or more, 100 nm or more, 120 nm or more, 150 nm or more, 190 nm or more, or 200 nm or more, and may be, for example, 1000 nm or less, 950 nm or less, 900 nm or less, 800 nm or less, 700 nm or less, 600 nm or less, 500 nm or less, 400 nm or less, 300 nm or less, or 200 nm or less.

The organic solvent A may have an upper limit value of a RED of, for example, less than 2.0, 1.9 or less, 1.5 or less, or 1.0 or less, the RED indicating a relative energy difference ($R_a$/$R_0$) calculated based on the HSP distance ($R_a$), between the fixing resin particles and the organic solvent A, and the radius ($R_0$) of a sphere (hereinafter, may be referred to as a "Hansen sphere") including only a plot of the organic solvent A in which the fixing resin particles are dissolved in a Hansen space. A lower limit value of the HSP distance is not particularly limited since the smaller the value of the HSP distance, the better the solubility of the fixing resin particles in the organic solvent A.

The HSP distance is calculated based on a HSP value of the fixing resin particles and a HSP value of the organic solvent A. The HSP value of the fixing resin particles is calculated based on a center coordinate of the Hansen sphere. The HSP distance can be calculated, for example, by the following method.

First, the organic solvent A and the fixing resin particles are mixed at any ratio. The any ratio is, for example, equivalent. A result of the mixing is visually observed to check a change in property of the mixture. The change in property is, for example, a change in physical property or appearance before and after the mixing, such as gelling or white clouding. Next, the HSP value of the organic solvent A is calculated using a known device in the related art, and is plotted on a three-dimensional coordinate (Hansen space). Note that, the HSP value may be, for example, a measurement value derived from an experiment or the like, or a document value described in a document or the like. Next, a Hansen sphere including all the organic solvent A in which the property of the fixing resin particles has been changed by the mixing is formed on the Hansen space. The center coordinate of the Hansen sphere is defined as the HSP value of the fixing resin particles. The HSP distance ($R_a$) can be calculated based on the HSP value of the organic solvent A and the HSP value of the fixing resin particles. Note that, the HSP distance ($R_a$) can be calculated according to the following calculation equation (1).

$$R_a^2 = 4 \times (dD_1 - dD_2)^2 + (dP_1 - dP_2)^2 + (dH_1 - dH_2)^2 \qquad (1)$$

In the calculation equation (1), $dD_1$ is energy due to a dispersion force between molecules of the organic solvent A, dPi is energy due to a dipole interaction between the molecules of the organic solvent A, $dH_1$ is energy due to hydrogen bonds between the molecules of the organic solvent A, $dD_2$ is energy due to a dispersion force between molecules of the fixing resin particles, $dP_2$ is energy due to a dipole interaction between the molecules of the fixing resin particles, and $dHz$ is energy due to hydrogen bonds of the molecules of the fixing resin particles.

The water may be ion exchange water, pure water, or the like. A blending amount (water proportion) of the water with respect to a total amount of the resin composition is appropriately determined according to desired ink characteristics and the like. The water proportion may be, for example, the balance except for other components. The blending amount of the water may be, for example, 50 mass% or more, 55 mass% or more, or 60 mass% or more, may be 95 mass% or less, 90 mass% or less, or 80 mass% or less, and is, for example, 50 mass% to 95 mass%, 55 mass% to 90 mass%, or 60 mass% to 80 mass%.

A viscosity of the resin composition may be, for example, 20 mPa·s or less, 10 mPa·s or less, 7 mPa.s or less, or 5 mPa.s or less, may be 1 mPa.s or more, or 2 mPa.s or more, and is, for example, 1 mPa.s to 20 mPa.s, or 2 mPa.s to 10 mPa.s.

It is estimated that the resin composition according to the present disclosure has improved blocking resistance due to, for example, the following mechanism. Here, a recording medium on which recording is performed using the resin composition is referred to as a "recording medium A", and a recording medium stacked on a recording surface of the recording medium A is referred to as a "recording medium B".

In the case of drying the resin composition applied to the recording medium at a low temperature, it is necessary to sufficiently form a film using the fixing resin particles contained in the resin composition even under a low temperature drying condition. That is, it is necessary to make a coating film made of the fixing resin particles uniform. In the present disclosure, for example, when the organic solvent A having a RED of less than 2.0 is used as a film forming auxiliary, the fixing resin particles are sufficiently swollen and the coating film is uniform even under the low temperature drying condition. On the other hand, although a resin composition using a film forming auxiliary can make the coating film uniform, the solvent tends to remain in the coating film during low temperature drying. Therefore, in the case where the recording medium B is stacked on the recording surface of the recording medium A, blocking is likely to occur. Therefore, an attempt has been made to eliminate the blocking by blending the lubricant particles into the resin composition according to the present disclosure. Regarding a relationship between the volume average particle diameter of the lubricant particles contained in the resin composition (hereinafter sometimes simply referred to as "the particle diameter of the lubricant particles") and the volume average particle diameter of the fixing resin particles contained in the resin composition (hereinafter sometimes simply referred to as "the particle diameter of the fixing resin particles"), in the case where the particle diameter of the lubricant particles is larger than the particle diameter of the fixing resin particles by a certain amount, even when the recording medium B is stacked on the recording surface of the recording medium A, the lubricant particles prevent contact between the fixing resin particles swollen by the organic solvent and the recording medium B, and thus, the blocking is less likely to occur between the recording medium A and the recording medium B. On the other hand, in the case where the particle diameter of the lubricant particles is smaller than the particle diameter of the fixing resin particles, when the recording medium B is stacked on the recording surface of the recording medium A, the lubricant particles cannot prevent the contact between the fixing resin particles swollen by the organic solvent and the recording medium B, and as a result, the blocking occurs between the recording medium A and the recording medium B.

In addition, a boiling point of the film forming auxiliary to be used also influences the presence or absence of the blocking. In the case of using an organic solvent that easily evaporates during drying, that is, an organic solvent having a boiling point within a certain range, since the resin composition on the recording medium A is sufficiently dried, the blocking is less likely to occur between the recording medium A and the recording medium B even when the recording medium B is stacked on the recording surface of the recording medium A. On the other hand, in the case of using an organic solvent that does not easily evaporate during drying, that is, an organic solvent having a boiling point outside a certain range, since the resin composition on the recording medium A is in an undried state, the blocking occurs between the recording medium A and the recording medium B when the recording medium B is stacked on the recording surface of the recording medium A.

However, the above mechanism is merely an estimation, and the present invention is not limited thereto.

The resin composition may further contain an additive known in the related art, as necessary. Examples of the additive include a surfactant, a fixing agent, a wetting agent, a pH adjuster, a viscosity modifier, a surface tension regulator, and an antifungal agent.

The surfactant is not particularly limited and may be appropriately selected depending on a purpose, and, for example, a commercially available product may be used. Specific examples of the surfactant include a silicone-based surfactant and an acetylene-based surfactant.

Examples of a commercially available product of the silicone-based surfactant include "SILFACE (registered trademark) SAG002", "SILFACE (registered trademark) SAG005", and "SILFACE (registered trademark) SAG503A" manufactured by Nissin Chemical Industry Co., Ltd.

Examples of a commercially available product of the acetylene-based surfactant include: "OLFINE (registered trademark) E1004", "OLFINE (registered trademark) E1008", and "OLFINE (registered trademark) E1010" manufactured by Nissin Chemical Industry Co., Ltd.; "SURFYNOL (registered trademark) 440", "SURFYNOL (registered trademark) 465", and "SURFYNOL (registered trademark) 485" manufactured by Air Products & Chemicals Inc.; and "Acetylenol (registered trademark) E40" and "Acetylenol (registered trademark) E100" manufactured by Kawaken Fine Chemicals Co., Ltd.

The resin composition may contain other surfactants in addition to or instead of the silicone-based surfactant or the acetylene-based surfactant. Examples of the other surfactants include: nonionic surfactants "EMULGEN (registered trademark)" series, "RHEODOL (registered trademark)" series, "EMASOL (registered trademark)" series, "EXCEL (registered trademark)" series, "EMANON (registered trademark)" series, "AMIET (registered trademark)" series, and "AMINON (registered trademark)" series manufactured by Kao Corporation; nonionic surfactants "SORBON (registered trademark)" series manufactured by TOHO Chemical Industry Co., Ltd.; nonionic surfactants "DOBANOX (registered trademark)" series, "LEOCOL (registered trademark)" series, "LEOX (registered trademark)" series, "LAOL, LEOCOL (registered trademark)" series, "LIONOL (registered trademark)" series, "CADENAX (registered trademark)" series, "LIONON (registered trademark)" series, and "LEOFAT (registered trademark)" series manufactured by Lion Corporation; anionic surfactants "EMAL (registered trademark)" series, "LATEMUL (registered trademark)" series, "VENOL (registered trademark)" series, "NEOPELEX (registered trademark)" series, NS SOAP, KS SOAP, OS SOAP, and "PELEX (registered trademark)" series manufactured by Kao Corporation; anionic surfactants "LIPOLAN (registered trademark)" series, "LIPON (registered trademark)" series, "SUNNOL (registered trademark)" series, "LIPOTAC (registered trademark) TE, ENAGICOL" series, "LIPAL (registered trademark)" series, and "LOTAT (registered trademark)" series manufactured by Lion Corporation; and cationic surfactants "CATIOGEN (registered trademark) ES-OW" and "CATIOGEN (registered trademark) ES-L" manufactured by DKS Co. Ltd. The surfactant may be used alone or in combination of two or more types thereof.

The wetting agent is not particularly limited, and examples thereof include: lower alcohols such as methyl alcohol, ethyl alcohol, n-propyl alcohol, isopropyl alcohol, n-butyl alcohol, sec-butyl alcohol, and tert-butyl alcohol; amides such as dimethylformamide and dimethylacetamide; ketones such as acetone; keto alcohols such as diacetone alcohol; ethers such as tetrahydrofuran and dioxane; polyethers such as a polyalkylene glycol; alkylene glycols; polyhydric alcohols such as glycerin, trimethylolpropane, and trimethylolethane; 2-pyrrolidone; N-methyl-2-pyrrolidone; and 1,3-dimethyl-2-imidazolidinone. Examples of the polyalkylene glycol include polyethylene glycol and polypropylene glycol. Examples of the alkylene glycol include ethylene glycol, propylene glycol, butylene glycol, diethylene glycol, triethylene glycol, dipropylene glycol, tripropylene glycol, thiodiglycol, and hexylene glycol. These wetting agents may be used alone or in combination of two or more types thereof. Among them, alkylene glycols and polyhydric alcohols such as glycerin are preferred.

Examples of the viscosity modifier include polyvinyl alcohol, cellulose, and a watersoluble resin.

The resin composition according to the present disclosure has excellent blocking resistance, and may thus be used, for example, as a resin composition for performing recording on a non-permeable recording medium by a printing device including a winding mechanism.

Next, an aqueous ink for inkjet recording according to the present disclosure (hereinafter, sometimes referred to as an "aqueous ink" or an "ink") will be described. The aqueous ink according to the present disclosure contains the resin composition according to the present disclosure and a pigment.

The pigment is not particularly limited, and examples thereof include carbon black, an inorganic pigment, and an organic pigment. Examples of the carbon black include furnace black, lamp black, acetylene black, and channel black. Examples of the inorganic pigment include titanium oxide, an iron oxide-based inorganic pigment, and a carbon black-based inorganic pigment. Examples of the organic pigment include: azo pigments such as azo lake, an insoluble azo pigment, a condensed azo pigment, and a chelate azo pigment; polycyclic pigments such as a phthalocyanine pigment, a perylene and perinone pigment, an anthraquinone pigment, a quinacridone pigment, a dioxazine pigment, a thioindigo pigment, an isoindolinone pigment, and a quinophthalone pigment; dye lake pigments such as a basic dye lake pigment and an acid dye lake pigment; nitro pigments; nitroso pigments; and aniline black daylight fluorescent pigments. Other pigments may be used as long as the pigment can be dispersed in an aqueous phase. Specific examples of these pigments include: C.I. Pigment Black 1, 6, and 7; C.I. Pigment Yellow 1, 2, 3, 12, 13, 14, 15, 16, 17, 55, 74, 78, 150, 151, 154, 180, 185, and 194; C.I. Pigment Orange 31 and 43; C.I. Pigment Red 2, 3, 5, 6, 7, 12, 15, 16, 48, 48:1, 53:1, 57, 57:1, 112, 122, 123, 139, 144, 146, 149, 150, 166, 168, 175, 176, 177, 178, 184, 185, 190, 202, 209, 221, 222, 224, and 238; C.I. Pigment Violet 19 and 196; C.I. Pigment Blue 1, 2, 3, 15, 15:1, 15:2, 15:3, 15:4, 16, 22, and 60; C.I. Pigment Green 7 and 36; and solid solutions of these pigments.

The pigment may be, for example, one that is dispersed in a solvent using a resin dispersant (also referred to as a resin dispersion pigment). As the resin dispersant, for example, a general polymer dispersant (also referred to as a resin for pigment dispersion or a resin dispersant) may be used, and the resin dispersant may be prepared. In addition, in the aqueous ink according to the present disclosure, the pigment may be encapsulated with a polymer. As the resin dispersant, for example, those containing at least one of methacrylic acid and acrylic acid as a monomer can be used, and for example, a commercially available product may be used. The resin dispersant may be, for example, a block copolymer, a graft copolymer, or a random copolymer made of hydrophobic monomers such as styrene, a styrene derivative, vinylnaphthalene, a vinylnaphthalene derivative, aliphatic alcohol esters of $\alpha,\beta$-ethylenically unsaturated carboxylic acids, or two or more monomers selected from the group consisting of acrylic acid, an acrylic acid derivative, maleic acid, a maleic acid derivative, itaconic acid, an itaconic acid derivative, fumaric acid, and a fumaric acid derivative, or a salt thereof. Examples of the commercially available product include: "Joncryl (registered trademark) 611", "Joncryl (registered trademark) 60", "Joncryl (registered trademark) 586", "Joncryl (registered trademark) 687", "Joncryl (registered trademark) 63", and "Joncryl (registered trademark) HPD296" manufactured by Johnson Polymer Co., Ltd.; "Disperbyk 190" and "Disperbyk 191" manufactured by BYK; and "Solsperse 20000" and "Solsperse 27000" manufactured by Zeneca Corporation.

Examples of a method for dispersing the pigment using the resin for pigment dispersion include dispersing the pigment using a dispersing device. The dispersing device used for dispersing the pigment is not particularly limited as long as the dispersing device is a general disperser, and examples thereof include a ball mill, a roll mill, and a sand mill (for example, a high-speed type sand mill).

The pigment may be a self-dispersion type pigment. The self-dispersion type pigment can be dispersed in water without using a dispersant, for example, by introducing at least one of a hydrophilic functional group such as a carbonyl group, a hydroxy group, a carboxylic acid group, a sulfonic acid group, and a phosphoric acid group, and a salt thereof into pigment particles by chemical bonding, either directly or through other groups. As the self-dispersion type pigment, for example, pigments treated by methods described in JPH08-3498A (corresponding to EP 0688836), JP2000-513396A (corresponding to US 5837045), JP2008-524400A (corresponding to US 2006/201380), JP2009-515007A (corresponding to US 2007/100023), and JP2011-515535A (corresponding to US 2009/229489) can be used. Note that the contents of these documents are incorporated herein by reference in their entireties. As a raw material of the self-dispersion type pigment, either an inorganic pigment or an organic pigment can be used. In addition, examples of the pigment suitable for the treatment include carbon black such as "MA8" and "MA100" manufactured by Mitsubishi Chemical Corporation. The self-dispersion type pigment may be, for example, a commercially available product. Examples of the commercially available product include: "CAB-O-JET (registered trademark) 200", "CAB-O-JET (registered trademark) 250C", "CAB-O-JET (registered trademark) 260M", "CAB-O-JET (registered trademark) 270Y", "CAB-O-JET (registered trademark) 300", "CAB-O-JET (registered trademark) 400", "CAB-O-JET (registered trademark) 450C", "CAB-O-JET (registered trademark) 465M", and "CAB-O-JET (registered trademark) 470Y" manufactured by Cabot Corporation; "BONJET (registered trademark) BLACK CW-2" and "BONJET (registered trademark) BLACK CW-3" manufactured by ORIENT CHEMICAL INDUSTRIES CO., LTD; and "LIOJET (registered trademark) WD BLACK 002C" manufactured by TOYO INK CO., LTD.

A concentration of the pigment is not particularly limited, and may be, for example, 2 wt% or more, 4 wt% or more, or 6 wt% or more, and may be, for example, 6 wt% or less, 4 wt% or less, or 2 wt% or less.

In the aqueous ink, a content ratio (A/B) of the content (A) of the organic solvent A to the content (B) of the lubricant particles is, for example, 6 to 24. In addition, in the aqueous ink, a content ratio (C/B) of the content (C) of the pigment to the content (B) of the lubricant particles is, for example, 3.1 to 12.4.

Next, an inkjet recording device according to the present disclosure will be described.

The inkjet recording device according to the present disclosure includes a flow path and an applying unit, in which the resin composition or the aqueous ink supplied to the flow path is applied to an object by the applying unit, the resin composition is the resin composition according to the present disclosure, and the aqueous ink is the aqueous ink for inkjet recording according to the present disclosure.

A schematic diagram in Figure shows a configuration of an example of the ink jet recording device according to the present disclosure. As shown in Figure, an ink jet recording device 100 includes an unwinding unit 101, a conveyance mechanism (not shown) such as a roller, a recording mechanism, a platen 103, a drying unit 104, a winding unit 105, and an ink storage unit (not shown) such as an ink cartridge or an ink tank. Note that, Figure shows the ink jet recording device that includes the platen 103. However, the present invention is not limited thereto, and for example, an inkjet recording device that does not include the platen 103 may be used. In addition, the inkjet recording device according to the present disclosure may include, for example, a maintenance unit (not shown). The unwinding unit 101 can set a roll-shaped recording medium P. Although not shown, the ink storage unit and an ink ejecting unit (ink jet head 102B) are connected to each other via an ink flow path, the aqueous ink is supplied to the ink flow path from the ink cartridge containing the aqueous ink, and the applying unit applies the aqueous ink to an object (recording medium) P on which an image is to be formed.

Inside the ink jet recording device 100, a conveyance path (not shown) is formed by a guide member. The recording medium P is conveyed from the unwinding unit 101 toward the winding unit 105 by the conveyance mechanism and the conveyance path, as shown by an arrow in Figure.

The recording mechanism includes a carriage 102A and the ink jet head (ink ejecting unit) 102B. The carriage 102A is supported by two guide rails (not shown) extending perpendicularly to a conveyance direction of the recording medium P. The two guide rails are supported by a housing (not shown) of the ink jet recording device 100. The carriage 102A is connected to a known belt mechanism (not shown) provided on the two guide rails. The belt mechanism is driven by a carriage motor (not shown). The carriage 102A connected to the belt mechanism reciprocates in a direction perpendicular to the conveyance direction of the recording medium P by driving of the carriage motor.

In addition, four ink tubes (not shown) that connect the ink storage unit and the inkjet head 102B, and a flexible flat cable (not shown) that electrically connects a control board (not shown) and the inkjet head 102B extend from the carriage 102A. With the four ink tubes, four color aqueous inks of yellow, magenta, cyan, and black contained in the ink storage unit are supplied to the inkjet head 102B. At least one of the four color aqueous inks is the aqueous ink for inkjet recording according to the present disclosure. The flexible flat cable transmits a control signal output from the control board to the inkjet head 102B.

The inkjet head 102B is mounted on the carriage 102A, as shown in Figure. A plurality of nozzles 102C are formed on a lower surface of the inkjet head 102B. Tips of the plurality of nozzles 102C are exposed from the lower surface of the carriage 102A and the inkjet head 102B. The inkjet head 102B includes an actuator (not shown) for applying a force to eject the aqueous ink supplied from the ink storage unit to the inkjet head 102B via the ink tubes. The actuator may be of any type, such as a piezoelectric element type, a thermal ink type, or an electrostatic attraction type. In the process of the carriage 102A reciprocating in the direction perpendicular to the conveyance direction of the recording medium P, the inkjet head 102B ejects the aqueous ink as minute ink droplets through the plurality of nozzles 102C. Accordingly, an image is recorded on the recording medium P. The platen 103 is disposed to face the recording mechanism, and supports the recording medium P conveyed from the unwinding unit 101. Note that, a roll-to-roll method is used in the device shown in Figure, but the present invention is not limited thereto. The inkjet recording device may be a device using a line type inkjet head or a serial type inkjet head. Note that, the roll-to-roll method is a method for sending out the recording medium and performing printing on the recording medium in a roll shape, and winding the recording medium in a roll shape again. The line type inkjet head is an inkjet head that covers the recording medium in the entire width direction thereof. The serial type inkjet head is an inkjet head that performs printing while reciprocating the inkjet head in the width direction of the recording medium.

The drying unit 104 dries a recording portion of the recording medium P. For example, in the case where the recording medium P is a non-permeable recording medium, when the recording portion of the recording medium P is heated and dried by the drying unit 104, the aqueous ink ejected when the recording medium P is wound up into a roll shape is prevented from being transferred to a back surface of a recording surface. The temperature on the recording medium P during the drying is, for example, 0.1 times to 10 times, 0.2 times to 8 times, or 0.5 times to 5 times the Tg of the fixing resin particles. The drying unit 104 may be of any type as long as it can dry the recording portion. That is, the drying unit 104 does not need to involve heating as long as it can dry the recording portion. In addition, in the case of using heating in the drying unit 104, the heating method is not particularly limited, and may be any method such as heat transfer, convection, or radiation. Examples of the drying unit 104 include a dryer (air blower, hot air), an oven, a belt conveyor oven, an iron, a hot press machine, a plate heater, an IR heater, and a microwave. Preferred are non-contact drying units, such as a dryer, an oven, a belt conveyor oven, an IR heater, or a microwave, which heat and dry the recording portion of the recording medium P without being in contact with the recording portion.

An example is shown in which the recording portion of the recording medium P is heated and dried by the drying unit 104 disposed on an inkjet head 102B side so as to face the recording portion of the recording medium P in the device shown in Figure, but the present invention is not limited thereto. The drying unit 104 only needs to be able to heat and dry the recording portion of the recording medium P, and may be disposed, for example, on a side opposite to the recording portion of the recording medium P, that is, on the side facing the nozzles 102C of the inkjet head 102B.

The recording medium P after recording and drying is conveyed to the winding unit 105.

Next, an inkjet recording method according to the present disclosure will be described.

The inkjet recording method according to the present disclosure includes: a recording step of performing recording by applying a resin composition or an aqueous ink to a recording medium by an inkjet method, in which the resin composition is the resin composition according to the present disclosure, and the aqueous ink is the aqueous ink for inkjet recording according to the present disclosure. The ink jet recording method according to the present disclosure may further include a drying step of drying the organic solvent contained in the resin composition or the aqueous ink on the recording medium.

The recording step can be performed using, for example, the ink jet recording device shown in Figure.

The inkjet recording method according to the present disclosure may be, for example, a method in which an intermediate transfer body is used as a recording medium on which an image is first recorded, an agglomerated liquid ejecting step and an aqueous ink ejecting step are performed on the intermediate transfer body, an image is formed on the intermediate transfer body, and then a transfer step is performed to transfer the image formed on the intermediate transfer body to a desired final recording medium.

In the ink jet recording method according to the present disclosure, examples of the recording medium include a roll-shaped recording medium. Examples of the recording medium include a non-permeable recording medium. Examples of the non-permeable recording medium include a medium including a film medium. Examples of the film medium include a biaxially stretched PET resin, an unstretched PET resin, a polyimide resin, a polypropylene, vinyl chloride, a polyethylene, a polystyrene, an AS resin, an ABS resin, an acrylic resin, a methacrylic resin, a PVA resin, a nylon resin, and a polyurethane resin. The recording medium may be, for example, coated paper. In the present disclosure, the term "coated paper" refers to, for example, one obtained by coating plain paper made of pulp, such as high-grade printing paper or intermediate-grade printing paper, with a coating agent to improve smoothness, whiteness, glossiness, and the like.

Specific examples thereof include high-quality coated paper and medium-quality coated paper.

The drying temperature in the drying step is, for example, 60°C to 120°C.

The ink jet recording method according to the present disclosure can be performed by, for example, using the inkjet recording device according to the present disclosure. The recording includes printing words, printing an image, or printing.

EXAMPLES

Next, Examples of the present disclosure will be described together with Comparative Examples. Note that the present invention is not limited or restricted by the following Examples and Comparative Examples. In the following description, "parts" and "%" are based on mass unless otherwise specified. Further, various physical properties are measured according to a measurement method to be described later.

[Preparation of Resin Composition and Aqueous Ink] (Examples 1 to 11 and Comparative Examples 1 to 17)

The organic solvent and the fixing resin particles in each of composition tables (Tables 1 and 2) were uniformly mixed to obtain a resin composition. Thereafter, the color material described in each of Tables 1 and 2 was added to the resin composition and uniformly mixed. The obtained mixture was filtered through a cellulose acetate type membrane filter (pore diameter: 3.00 $\mu$m) manufactured by TOYO ROSHI KAISHA, LTD. to obtain an aqueous ink for inkjet recording in each of Examples 1 to 11 and Comparative Examples 1 to 17 shown in Tables 1 and 2.

[Evaluation of Physical Properties]

The aqueous ink in each of Examples 1 to 11 and Comparative Examples 1 to 17 was evaluated for (a) blocking resistance, (b) scratch resistance, and (c) OD value change using the following methods.

Note that, in the evaluation regarding the following coating film, the coating film was prepared as follows. First, the aqueous ink in each of Examples 1 to 11 and Comparative Examples 1 to 17 was applied onto a base material (PET sheet, thickness: 38 $\mu$m, manufactured by TOPPAN Holdings Inc.) using a bar coater (depth: 9 $\mu$m, manufactured by OSG SYSTEM PRODUCTS Co., Ltd.). The obtained base material was dried using a warm air dryer under conditions of 60°C for 1 min to obtain a coating film.

(a) Blocking Resistance

The blocking resistance of the prepared coating film was evaluated according to the following procedure. First, a sample obtained by overlapping the prepared coating film and a non-printing surface of the base material and being left under a pressure at 40 kPa overnight in an environment at a temperature of 40°C was prepared in N sets (N > 1), which were used as samples for evaluating the blocking resistance. After leaving the samples overnight, the coating film and the non-printing surface of the base material were peeled off, and the number of samples from which the coating film had peeled off was checked. The blocking resistance was evaluated based on the following criteria, using a level that did not contain lubricant particles and had the same components and amounts of the organic solvent and the same components of the fixing resin particles as a comparison target.

<Evaluation criteria for blocking resistance>

○: the number of peeled-off coating films was smaller than that of the comparison target. ×: the number of peeled-off coating films was not smaller than that of the comparison target.

(b) Scratch Resistance

The scratch resistance of the prepared coating film was evaluated according to the following procedure. A white friction cloth (Kanakin No. 3) was attached to a friction element of a Gakushin tester (trade name: AB-301, manufactured by TESTER SANGYO CO., LTD.), and the friction element was placed on the coating film and scratched back and forth 300 times under a load of 500 g. The scratch resistance was evaluated by visually observing the degree of discoloration of the coating film (exposed portion of the base material) by comparison with a limit sample in which the discolored portion was 30%, based on the following criteria.

<Evaluation criteria for scratch resistance>

A: discoloration due to scratching cannot be observed. B: the discolored portion due to scratching is less than 30%. C: the discolored portion due to scratching is 30% or more.

(c) OD Value Change

The optical density (OD value) of the prepared coating film was measured using a spectrophotometer exact (filter: M0 (No), light source: D20, viewing angle: 2°, ISO status T) manufactured by X-Rite, Inc. After the measurement, the OD value change from a reference value (not including lubricant particles) was evaluated according to the following criteria. Note that, for Examples 1 to 7 and Comparative Examples 2 to 5, the OD value in Comparative Example 1 was used as the reference value. For Example 8, the OD value in Comparative Example 6 was used as the reference value. For Example 9, the OD value in Comparative Example 7 was used as the reference value. For Example 10, the OD value in Comparative Example 8 was used as the reference value. For Example 11, the OD value in Comparative Example 9 was used as the reference value. For Comparative Example 10, the OD value in Comparative Example 11 was used as the reference value. For Comparative Example 12, the OD value in Comparative Example 13 was used as the reference value. For Comparative Example 14, the OD value in Comparative Example 15 was used as the reference value. For Comparative Example 16, the OD value in Comparative Example 17 was used as the reference value.

<Evaluation criteria for OD value change>

∘: the OD value change from the reference value was 0.05 or more. ✕: the OD value change from the reference value was less than 0.05.

The aqueous ink composition and the evaluation result of the aqueous ink in each of Examples 1 to 11 and Comparative Examples 1 to 17 are shown in Tables 1 and 2.

[Table 1]

| Composition | | Note | Example | | | | | | |
|---|---|---|---|---|---|---|---|---|---|
| | | | 1 | 2 | 3 | 4 | 5 | 6 | 7 |
| Water | | | Balance | Balance | Balance | Balance | Balance | Balance | Balance |
| Organic solvent | Propylene glycol (boiling point: 187°C) | | 18.0 | 18.0 | 18.0 | 18.0 | 18.0 | 18.0 | 18.0 |
| | Tripropylene glycol (boiling point: 270°C) | Organic solvent A | | | | | | | |
| | Triethylene glycol monobutyl ether (boiling point: 278°C) | Organic solvent A | 6.0 | 6.0 | 6.0 | 6.0 | 6.0 | 6.0 | 6.0 |
| | Glycerin (boiling point: 290°C) | | | | | | | | |
| Surfactant | OLFINE® E1004 (*1) | | 1.0 | 1.0 | 1.0 | 1.0 | 1.0 | 1.0 | 1.0 |
| Fixing resin (fixing resin particles) | Mowinyl® 6969D (particle diameter = 110 nm) (*2) | | 8.4 | 8.4 | 8.4 | 8.4 | 8.4 | 8.4 | 8.4 |
| | Mowinyl® 6820 (particle diameter = 80 nm) (*3) | | | | | | | | |
| | Mowinyl® 6800 (particle diameter = 80 nm) (*4) | | | | | | | | |
| Lubricant particles | CHALIN® E-370 (particle diameter = 300 nm) (*5) | Organic compound | 1.0 | | | | 0.1 | 8.0 | 0.25 |
| | CHALIN® RU-911 (particle diameter = 30 nm) (*6) | Organic compound | | 1.0 | | | | | |
| | CHEMIPEARL® WF4002 (particle diameter = 200 nm) (*7) | Organic compound | | | 1.0 | | | | |
| | CHEMIPEARL® W401 (particle diameter = 1000 nm) (*8) | Organic compound | | | | 1.0 | | | |
| | Quartron® PL-20 (particle diameter = 220 nm) (*9) | Inorganic compound | | | | | | | |
| | AQUACER® 531 (particle diameter = 170 nm) (*10) | Organic compound | | | | | | | |
| Coloring material | Magenta pigment (particle diameter = 120 nm) (*11) | | 3.1 | 3.1 | 3.1 | 3.1 | 3.1 | 3.1 | 3.1 |
| Difference ($d_1$-$d_2$) between volume average particle diameter ($d_1$) of lubricant particles and volume average particle diameter ($d_2$) of fixing resin particles | | | 190 | 190 | 90 | 890 | 190 | 190 | 190 |

(continued)

| Composition | | | Note | Example | | | | | | |
|---|---|---|---|---|---|---|---|---|---|---|
| | | | | 1 | 2 | 3 | 4 | 5 | 6 | 7 |
| Water | | | | Balance | Balance | Balance | Balance | Balance | Balance | Balance |
| Organic solvent A/lubricant particles | | | | 6.0 | 6.0 | 6.0 | 6.0 | 60.0 | 0.8 | 24.0 |
| Pigment/lubricant particles | | | | 3.1 | 3.1 | 3.1 | 3.1 | 31.0 | 0.4 | 12.4 |
| RED indicating relative energy difference ($R_a/R_o$) calculated based on HSP distance ($R_a$) between organic solvent A and fixing resin particles and radius ($R_o$) of Hansen sphere | | | | 1.0 | 1.0 | 1.0 | 1.0 | 1.0 | 1.0 | 1.0 |
| Evaluation item | Blocking resistance | | | ○ | ○ | ○ | ○ | ○ | ○ | ○ |
| | Scratch resistance | | | A | A | A | A | B | B | A |
| | OD value change | OD value | | 0.93 | 0.93 | 0.89 | 0.87 | 0.97 | 1.08 | 0.98 |
| | | Change from reference value | | 0.05 | 0.05 | 0.01 | -0.01 | 0.09 | 0.20 | 0.10 |
| | | Evaluation | | ○ | ○ | × | × | ○ | ○ | ○ |

| Composition | | | Note | Comparative Example | | | | |
|---|---|---|---|---|---|---|---|---|
| | | | | 1 | 2 | 3 | 4 | 5 |
| Water | | | | Balance | Balance | Balance | Balance | Balance |
| Organic solvent | Propylene glycol (boiling point: 187°C) | | | 18.0 | 18.0 | 18.0 | 18.0 | 18.0 |
| | Tripropylene glycol (boiling point: 270°C) | | Organic solvent A | | | | | |
| | Triethylene glycol monobutyl ether (boiling point: 278°C) | | Organic solvent A | 6.0 | 6.0 | 6.0 | 6.0 | 6.0 |
| | Glycerin (boiling point: 290°C) | | | | | | | |
| Surfactant | OLFINE® E1004 (*1) | | | 1.0 | 1.0 | 1.0 | 1.0 | 1.0 |
| Fixing resin (fixing resin particles) | Mowinyl® 6969D (particle diameter = 110 nm) (*2) | | | 8.4 | 8.4 | 8.4 | 8.4 | 8.4 |
| | Mowinyl® 6820 (particle diameter = 80 nm) (*3) | | | | | | | |
| | Mowinyl® 6800 (particle diameter = 80 nm) (*4) | | | | | | | |

(continued)

| Composition | | Note | Comparative Example | | | | |
|---|---|---|---|---|---|---|---|
| | | | 1 | 2 | 3 | 4 | 5 |
| Water | | | Balance | Balance | Balance | Balance | Balance |
| Lubricant particles | CHALIN® E-370 (particle diameter = 300 nm) (*5) | Organic compound | | | | 0.05 | 10.0 |
| | CHALIN® RU-911 (particle diameter = 30 nm) (*6) | Organic compound | | | | | |
| | CHEMIPEARL® WF4002 (particle diameter = 200 nm) (*7) | Organic compound | | | | | |
| | CHEMIPEARL® W401 (particle diameter = 1000 nm) (*8) | Organic compound | | | | | |
| | Quartron® PL-20 (particle diameter = 220 nm) (*9) | Inorganic compound | | 1.0 | | | |
| | AQUACER® 531 (particle diameter = 170 nm) (*10) | Organic compound | | | 1.0 | | |
| Coloring material | Magenta pigment (particle diameter = 120 nm) (*11) | | 3.1 | 3.1 | 3.1 | 3.1 | 3.1 |
| Difference ($d_1$-$d_2$) between volume average particle diameter ($d_1$) of lubricant particles and volume average particle diameter ($d_2$) of fixing resin particles | | | - | 110 | 60 | 190 | 190 |
| Organic solvent A/lubricant particles | | | - | 6.0 | 6.0 | 120.0 | 0.6 |
| Pigment/lubricant particles | | | - | 3.1 | 3.1 | 62.0 | 0.3 |
| RED indicating relative energy difference ($R_a/R_o$) calculated based on HSP distance ($R_a$) between organic solvent A and fixing resin particles and radius ($R_o$) of Hansen sphere | | | 1.0 | 1.0 | 1.0 | 1.0 | 1.0 |

EP 4 497 790 A2

13

(continued)

| Composition | | | Note | Comparative Example | | | | |
|---|---|---|---|---|---|---|---|---|
| | | | | 1 | 2 | 3 | 4 | 5 |
| Water | | | | Balance | Balance | Balance | Balance | Balance |
| Evaluation item | Blocking resistance | | | - | × | × | × | ○ |
| | Scratch resistance | | | B | B | A | B | C |
| | OD value change | OD value | | 0.88 | 0.91 | 0.90 | 0.91 | 1.07 |
| | | Change from reference value | | - | 0.03 | 0.02 | 0.03 | 0.19 |
| | | Evaluation | | - | × | × | × | ○ |

*1: acetylene glycol-based surfactant (ethylene oxide (10 mol) of a diol) adduct, active component = 100%, manufactured by Nissin Chemical co., ltd.

*2: acrylic resin emulsion (Tg = 71°C), manufactured by Japan Coating Resin co., ltd.

*3: acrylic resin emulsion (Tg = 35°C), manufactured by Japan Coating Resin co., ltd.

*4: acrylic resin emulsion (Tg = 80°C), manufactured by Japan Coating Resin co., ltd.

*5: silicone acrylic copolymer resin emulsion, manufactured by Nissin Chemical co., ltd.

*6: silicone urethane copolymer resin emulsion, manufactured by Nissin Chemical co., ltd.

*7: polyolefin-based aqueous dispersion, manufactured by Mitsui Chemicals, Inc.

*8: polyolefin-based aqueous dispersion, manufactured by Mitsui Chemicals, Inc.

*9: colloidal silica, manufactured by FUSO CHEMICAL CO., LTD.

*10: modified PE wax emulsion; manufactured by BYK

* 11: aqueous dispersion liquid of C.I. Pigment Red 122 (containing resin dispersant), numerical values in table indicate pigment solid blending amount.

[Table 2]

| Composition | | Note | Example | | | | Comparative Example | | | |
|---|---|---|---|---|---|---|---|---|---|---|
| | | | 8 | 9 | 10 | 11 | 6 | 7 | 8 | 9 |
| Water | | | Balance | Balance | Balance | Balance | Balance | Balance | Balance | Balance |
| Organic solvent | Propylene glycol (boiling point: 187°C) | | 18.0 | 18.0 | 18.0 | 18.0 | 18.0 | 18.0 | 18.0 | 18.0 |
| | Tripropylene glycol (boiling point: 270°C) | Organic solvent A | 6.0 | | | | 6.0 | | | |
| | Triethylene glycol monobutyl ether (boiling point: 278°C) | Organic solvent A | | 10.0 | 6.0 | 6.0 | | 10.0 | 6.0 | 6.0 |
| | Glycerin (boiling point: 290°C) | | | | | | | | | |
| Surfactant | OLFINE® E1004 (*1) | | 1.0 | 1.0 | 1.0 | 1.0 | 1.0 | 1.0 | 1.0 | 1.0 |
| Fixing resin (fixing resin particles) | Mowinyl® 6969D (particle diameter = 110 nm) (*2) | | 8.4 | 8.4 | | | 8.4 | 8.4 | | |
| | Mowinyl® 6820 (particle diameter = 80 nm) (*3) | | | | 8.4 | | | | 8.4 | |
| | Mowinyl® 6800 (particle diameter = 80 nm) (*4) | | | | | 8.4 | | | | 8.4 |
| Lubricant particles | CHALIN® E-370 (particle diameter = 300 nm) (*5) | Organic compound | 1.0 | 1.0 | 1.0 | 1.0 | | | | |
| | CHALIN® RU-911 (particle diameter = 30 nm) (*6) | Organic compound | | | | | | | | |
| | CHEMIPEARL® WF4002 (particle diameter = 200 nm) (*7) | Organic compound | | | | | | | | |
| | CHEMIPEARL® W401 (particle diameter = 1000 nm) (*8) | Organic compound | | | | | | | | |
| | Quartron® PL-20 (particle diameter = 220 nm) (*9) | Inorganic compound | | | | | | | | |
| | AQUACER® 531 (particle diameter = 170 nm) (*10) | Organic compound | | | | | | | | |
| Coloring material | Magenta pigment (particle diameter = 120 nm) (*11) | | 3.1 | 3.1 | 3.1 | 3.1 | 3.1 | 3.1 | 3.1 | 3.1 |

(continued)

| Composition | | Note | Example | | | | Comparative Example | | | |
|---|---|---|---|---|---|---|---|---|---|---|
| | | | 8 | 9 | 10 | 11 | 6 | 7 | 8 | 9 |
| Water | | | Balance | Balance | Balance | Balance | Balance | Balance | Balance | Balance |
| Difference ($d_1$-$d_2$) between volume average particle diameter ($d_1$) of lubricant particles and volume average particle diameter ($d_2$) of fixing resin particles | | | 190 | 190 | 220 | 220 | - | - | - | - |
| Organic solvent A/lubricant particles | | | 6.0 | 10.0 | 6.0 | 6.0 | - | - | - | - |
| Pigment/lubricant particles | | | 3.1 | 3.1 | 3.1 | 3.1 | - | - | - | - |
| RED indicating relative energy difference ($R_a$/$R_o$) calculated based on HSP distance ($R_a$) between organic solvent A and fixing resin particles and radius ($R_o$) of Hansen sphere | | | 1.8 | 1.0 | 0.6 | 0.7 | 1.8 | 1.0 | 0.6 | 0.7 |
| Evaluation item | Blocking resistance | | ○ | ○ | ○ | ○ | - | - | - | - |
| | Scratch resistance | | A | A | A | A | B | B | C | B |
| | OD value change | OD value change | 0.88 | 0.97 | 1.00 | 0.99 | 0.87 | 0.92 | 0.94 | 0.94 |
| | | Change from reference value | 0.01 | 0.05 | 0.06 | 0.05 | - | - | - | - |
| | | Evaluation | × | ○ | ○ | ○ | - | - | - | - |

| Composition | | Note | Comparative Example | | | | | | | |
|---|---|---|---|---|---|---|---|---|---|---|
| | | | 10 | 11 | 12 | 13 | 14 | 15 | 16 | 17 |
| Water | | | Balance | Balance | Balance | Balance | Balance | Balance | Balance | Balance |
| Organic solvent | Propylene glycol (boiling point: 187°C) | | 18.0 | 18.0 | 24.0 | 24.0 | 18.0 | 18.0 | 18.0 | 18.0 |
| | Tripropylene glycol (boiling point: 270°C) | Organic solvent A | | | | | | | | |
| | Triethylene glycol monobutyl ether (boiling point: 278°C) | Organic solvent A | | | | | 2.0 | 2.0 | 12.0 | 12.0 |
| | Glycerin (boiling point: 290°C) | | 6.0 | 6.0 | | | | | | |
| Surfactant | OLFINE® E1004 (*1) | | 1.0 | 1.0 | 1.0 | 1.0 | 1.0 | 1.0 | 1.0 | 1.0 |

EP 4 497 790 A2

| Composition | | Note | Comparative Example | | | | | | | |
|---|---|---|---|---|---|---|---|---|---|---|
| | | | 10 | 11 | 12 | 13 | 14 | 15 | 16 | 17 |
| Water | | | Balance | Balance | Balance | Balance | Balance | Balance | Balance | Balance |
| Fixing resin (fixing resin particles) | Mowinyl® 6969D (particle diameter = 110 nm) (*2) | | 8.4 | 8.4 | 8.4 | 8.4 | 8.4 | 8.4 | 8.4 | 8.4 |
| | Mowinyl® 6820 (particle diameter = 80 nm) (*3) | | | | | | | | | |
| | Mowinyl® 6800 (particle diameter = 80 nm) (*4) | | | | | | | | | |
| Lubricant particles | CHALIN® E-370 (particle diameter = 300 nm) (*5) | Organic compound | 1.0 | | 1.0 | | 1.0 | | 1.0 | |
| | CHALIN® RU-911 (particle diameter = 30 nm) (*6) | Organic compound | | | | | | | | |
| | CHEMIPEARL® WF4002 (particle diameter = 200 nm) (*7) | Organic compound | | | | | | | | |
| | CHEMIPEARL® W401 (particle diameter = 1000 nm) (*8) | Organic compound | | | | | | | | |
| | Quartron® PL-20 (particle diameter = 220 nm) (*9) | Inorganic compound | | | | | | | | |
| | AQUACER® 531 (particle diameter = 170 nm) (*10) | Organic compound | | | | | | | | |
| Coloring material | Magenta pigment (particle diameter = 120 nm) (*11) | | 3.1 | 3.1 | 3.1 | 3.1 | 3.1 | 3.1 | 3.1 | 3.1 |
| Difference ($d_1$-$d_2$) between volume average particle diameter ($d_1$) of lubricant particles and volume average particle diameter ($d_2$) of fixing resin particles | | | 190 | - | 190 | - | 190 | - | 190 | - |
| Organic solvent A/lubricant particles | | | 6.0 | - | 0.0 | - | 2.0 | - | 12.0 | - |
| Pigment/lubricant particles | | | 3.1 | - | 3.1 | - | 3.1 | - | 3.1 | - |
| RED indicating relative energy difference ($R_a$/$R_o$) calculated based on HSP distance ($R_a$) between organic solvent A and fixing resin particles and radius ($R_o$) of Hansen sphere | | | - | - | - | - | 1.0 | 1.0 | 1.0 | 1.0 |

(continued)

| Composition | | | Note | Comparative Example | | | | | | | |
|---|---|---|---|---|---|---|---|---|---|---|---|
| | | | | 10 | 11 | 12 | 13 | 14 | 15 | 16 | 17 |
| Water | | | | Balance | Balance | Balance | Balance | Balance | Balance | Balance | Balance |
| Evaluation item | Blocking resistance | | | × | - | × | - | × | - | × | - |
| | Scratch resistance | | | B | B | C | B | B | B | A | B |
| | OD value change | OD value change | | 0.88 | 0.92 | 0.97 | 0.96 | 0.96 | 0.94 | 0.96 | 0.93 |
| | | Change from reference value | | 0.04 | - | 0.01 | - | 0.02 | - | 0.03 | - |
| | | Evaluation | | × | - | × | - | × | - | × | - |

*1: acetylene glycol-based surfactant (ethylene oxide (10 mol) of a diol) adduct, active component = 100%, manufactured by Nissin Chemical co., ltd.

*2: acrylic resin emulsion (Tg = 71°C), manufactured by Japan Coating Resin co., ltd.

*3: acrylic resin emulsion (Tg = 35°C), manufactured by Japan Coating Resin co., ltd.

*4: acrylic resin emulsion (Tg = 80°C), manufactured by Japan Coating Resin co., ltd.

*5: silicone acrylic copolymer resin emulsion, manufactured by Nissin Chemical co., ltd.

*6: silicone urethane copolymer resin emulsion, manufactured by Nissin Chemical co., ltd.

*7: polyolefin-based aqueous dispersion, manufactured by Mitsui Chemicals, Inc.

*8: polyolefin-based aqueous dispersion, manufactured by Mitsui Chemicals, Inc.

*9: colloidal silica, manufactured by FUSO CHEMICAL CO., LTD.

*10: modified PE wax emulsion; manufactured by BYK

*11: aqueous dispersion liquid of C.I. Pigment Red 122 (containing resin dispersant), numerical values in table indicate pigment solid blending amount.

As shown in Tables 1 and 2, Examples 1 to 11 all have blocking resistance of "○" and scratch resistance of "B" or more.

In Examples 1, 2, 5 to 7, and 9 to 11 in which the lubricant particles include a hydrophilic portion and a hydrophobic portion and contain a polyorganosiloxane as a main chain and at least one of an acrylic component and a urethane component as a side chain, the fixing resin particles contain at least one of an acrylic resin emulsion and a urethane resin emulsion, and the RED is 1.0 or less, the OD value changes are all evaluated as "○". A possible reason for the improvement in OD value is considered to be that, for example, when a solvent (organic solvent A) whose RED is close to that of the fixing resin particles is used, the coating film is uniform (smooth), and thereby light scattering on the surface of the coating film is reduced. In addition, since the acrylic component or the urethane component contained the lubricant particles is a hydrophilic portion, the compatibility of the fixing resin particles and the lubricant particles is improved. As a result, the coating film is uniform (smooth), which is also considered as a possible reason for the improvement in OD value.

In Examples 1 to 4 and 7 to 11 in which the content ratio (A/B) of the content (A) of the organic solvent having a boiling point of 190°C to 280°C to the content (B) of the lubricant particles and the content ratio (C/B) of the content (C) of the pigment to the content (B) of the lubricant particles are within a specific range, the scratch resistance is "A" or more.

On the other hand, in Comparative Example 2 which contains no organic compound as the lubricant particles, the blocking resistance is "×". This is presumed to be because the fixing resin particles, as an organic compound, have poor compatibility with the lubricant particles, and the lubricant particles cannot be retained in the coating film. That is, in the case where an organic compound is contained as the lubricant particles, it is easier to mix with the fixing resin particles, also as an organic compound, and therefore it is easier to retain the lubricant particles in the coating film. On the other hand, in the case where the lubricant particles do not contain an organic compound (made only of an inorganic compound), it is difficult to mix with the fixing resin particles, as an organic compound, and therefore, it is impossible to retain the lubricant particles in the coating film.

In Comparative Example 3 in which the difference $(d_1-d_2)$ between the volume average particle diameter $(d_1)$ of the lubricant particles and the volume average particle diameter $(d_2)$ of the fixing resin particles is less than 70 nm, the blocking resistance is "×". This is presumed to be because the lubricant particles are not sufficiently large compared to the fixing resin particles, so that contact between the coating film and the recording medium cannot be sufficiently prevented.

In Comparative Example 4 in which the content of the lubricant particles is less than 0.1 wt%, the blocking resistance is "×". This is presumed to be because the content of the lubricant particles does not satisfy the amount required to exhibit the blocking resistance. In Comparative Example 5 in which the content of lubricant particles is more than 8.0 wt%, the scratch resistance is "C". This is presumed to be because when excessive lubricant particles are present in the coating film, bonding or fusion between the fixing resin particles, which is necessary for the scratch resistance of the coating film itself to be B or more, is inhibited.

In all of Comparative Examples 10 and 12 which do not contain the organic solvent having a boiling point of 190°C to 280°C and Comparative Examples 14 and 16 in which the content of the organic solvent having a boiling point of 190°C to 280°C is outside the range of 6.0 wt% to 10.0 wt%, the blocking resistance is "×". In addition, in Comparative Example 12, the scratch resistance is "C". This is presumed to be due to insufficient film formation due to a lack of the organic solvent A, which is a film forming auxiliary, or insufficient drying of the organic solvent.

Note that, Comparative Examples 1, 6 to 9, 11, 13, 15, and 17 do not contain any lubricant particles, that is, the contact between the coating film and the recording medium is not prevented, and therefore have no blocking resistance (no evaluation).

Apart or all of the above embodiments and Examples may be described as the following appendixes, but the present invention is not limited thereto. (Appendix 1) A resin composition containing:

an organic solvent;
fixing resin particles;
lubricant particles; and
water, in which
the lubricant particles contain an organic compound,
a difference $(d_1-d_2)$ between a volume average particle diameter $(d_1)$ of the lubricant particles and a volume average particle diameter $(d_2)$ of the fixing resin particles is 70 nm or more,
the organic solvent includes an organic solvent having a boiling point of 190°C to 280°C, and
in a total weight of the resin composition, a content of the lubricant particles is 0.1 wt% to 8.0 wt%, and a content of the organic solvent having a boiling point of 190°C to 280°C is 6.0 wt% to 10.0 wt%.

(Appendix 2) The resin composition according to Appendix 1, in which the lubricant particles are an organic compound.
(Appendix 3) The resin composition according to Appendix 1 or 2, in which the resin composition is a resin composition for performing recording on a non-permeable recording medium by a printing device including a winding mechanism.

**EP 4 497 790 A2**

(Appendix 4) An aqueous ink for ink jet recording containing:

a resin composition; and
a pigment, in which
the resin composition is the resin composition according to any one of Appendixes 1 to 3.

(Appendix 5) The aqueous ink for inkjet recording according to Appendix 4, in which

a content ratio (A/B) of a content (A) of the organic solvent having a boiling point of 190°C to 280°C to a content (B) of the lubricant particles is 6 to 24, and
a content ratio (C/B) of a content (C) of the pigment to the content (B) of the lubricant particles is 3.1 to 12.4.

(Appendix 6) The aqueous ink for ink jet recording according to Appendix 4 or 5, in which the fixing resin particles have a glass transition temperature Tg of 35°C to 80°C.

(Appendix 7) The aqueous ink for ink jet recording according to any one of Appendixes 4 to 6, in which

the organic solvent having a boiling point of 190°C to 280°C has a RED of less than 2.0, the RED indicating a relative energy difference ($R_a/R_0$) calculated based on a HSP distance ($R_a$), between the fixing resin particles and the organic solvent having a boiling point of 190°C to 280°C, and a radius ($R_0$) of a sphere (Hansen sphere) including only a plot of the organic solvent having a boiling point of 190°C to 280°C in which the fixing resin particles are dissolved in a Hansen space,
the HSP distance is calculated based on a HSP value of the fixing resin particles and a HSP value of the organic solvent having a boiling point of 190°C to 280°C, and
the HSP value of the fixing resin particles is calculated based on a center coordinate of the Hansen sphere.

(Appendix 8) The aqueous ink for inkjet recording according to Appendix 7, in which

the lubricant particles include a hydrophilic portion and a hydrophobic portion, and contain a polyorganosiloxane as a main chain and at least one of an acrylic component and a urethane component as a side chain,
the fixing resin particles contain at least one of an acrylic resin emulsion and a urethane resin emulsion, and
the RED is 1.0 or less.

(Appendix 9) An inkjet recording device including:

a flow path; and
an applying unit, in which
a resin composition supplied to the flow path is applied to an object by the applying unit, and
the resin composition is the resin composition according to any one of Appendixes 1 to 3.

(Appendix 10) An inkjet recording device including:

a flow path; and
an applying unit, in which
an aqueous ink supplied to the flow path is applied to an object by the applying unit, and
the aqueous ink is the aqueous ink for ink jet recording according to any one of Appendixes 4 to 8.

(Appendix 11) An ink jet recording method including:

a recording step of performing recording by applying a resin composition to a recording medium by an inkjet method, in which
the resin composition is the resin composition according to any one of Appendixes 1 to 3.

(Appendix 12) An inkjet recording method including:

a recording step of performing recording by applying an aqueous ink to a recording medium by an inkjet method, in which
the aqueous ink is the aqueous ink for ink jet recording according to any one of Appendixes 4 to 8.

**20**

In this way, the resin composition and the aqueous ink according to the present disclosure have excellent blocking resistance and excellent scratch resistance. The resin composition and the aqueous ink according to the present disclosure are widely applicable to ink jet recording on various recording media.

Obviously, numerous modifications and variations of the present invention(s) are possible in light of the above teachings. It is therefore to be understood that within the scope of the appended claims, the invention(s) may be practiced otherwise than as specifically described herein.

**Claims**

1. A resin composition comprising:

   an organic solvent comprising an organic solvent having a boiling point of 190°C to 280°C;
   fixing resin particles;
   lubricant particles each comprising an organic compound; and
   water, wherein
   a difference ($d_1$-$d_2$) between a volume average particle diameter ($d_1$) of the lubricant particles and a volume average particle diameter ($d_2$) of the fixing resin particles is 70 nm or more, and
   in a total weight of the resin composition, a content of the lubricant particles is 0.1 wt% to 8.0 wt%, and a content of the organic solvent having a boiling point of 190°C to 280°C is 6.0 wt% to 10.0 wt%.

2. The resin composition according to claim 1, wherein the lubricant particles are each made of the organic compound.

3. The resin composition according to claim 1, wherein the resin composition is suitable for performing recording on a non-permeable recording medium by a printing device comprising a winding mechanism.

4. An aqueous ink comprising:

   the resin composition according to claim 1; and
   a pigment.

5. The aqueous ink according to claim 4, wherein

   a content ratio (A/B) of a content (A) of the organic solvent having a boiling point of 190°C to 280°C to a content (B) of the lubricant particles is 6 to 24, and
   a content ratio (C/B) of a content (C) of the pigment to the content (B) of the lubricant particles is 3.1 to 12.4.

6. The aqueous ink according to claim 4, wherein the fixing resin particles have a glass transition temperature Tg of 35°C to 80°C.

7. The aqueous ink according to claim 4, wherein

   a relative energy difference (RED), $R_a/R_0$, in the Hansen solubility parameter (HSP) system between the organic solvent having a boiling point of 190°C to 280°C and the fixing resin particles is less than 2.0;
   $R_a$ is an HSP distance between the organic solvent having a boiling point of 190°C to 280°C and the fixing resin particles; and
   $R_0$ is a radius of a Hansen sphere of the organic solvent having a boiling point of 190°C to 280°C, the Hansen sphere being determined so as to include coordinates of the organic solvent having a boiling point of 190°C to 280°C in which the fixing resin particles are dissolvable.

8. The aqueous ink according to claim 7, wherein

   the lubricant particles each comprise a hydrophilic portion and a hydrophobic portion, and each comprise a polymer having a polyorganosiloxane as a main chain thereof and at least one of an acrylic component or a urethane component as a side chain thereof,
   the fixing resin particles comprises at least one of an acrylic resin emulsion or a urethane resin emulsion, and
   the RED is 1.0 or less.

9. An inkjet recording device comprising:

   the resin composition according to any one of claims 1 to 3;
   a flow path through which the resin composition flows; and
   an applying unit connecting to the flow path and configured to apply the resin composition onto an object for recording.

10. An inkjet recording device comprising:

    the aqueous ink according to any one of claims 4 to 8;
    a flow path through which the aqueous ink flows; and
    an applying unit connecting to the flow path and configured to apply the aqueous ink onto an object for recording.

11. An inkjet recording method comprising:
    applying the resin composition according to any one of claims 1 to 3 onto a recording medium by an inkjet method.

12. An inkjet recording method comprising:
    applying the aqueous ink according to any one of claims 4 to 8 onto a recording medium by an inkjet method.

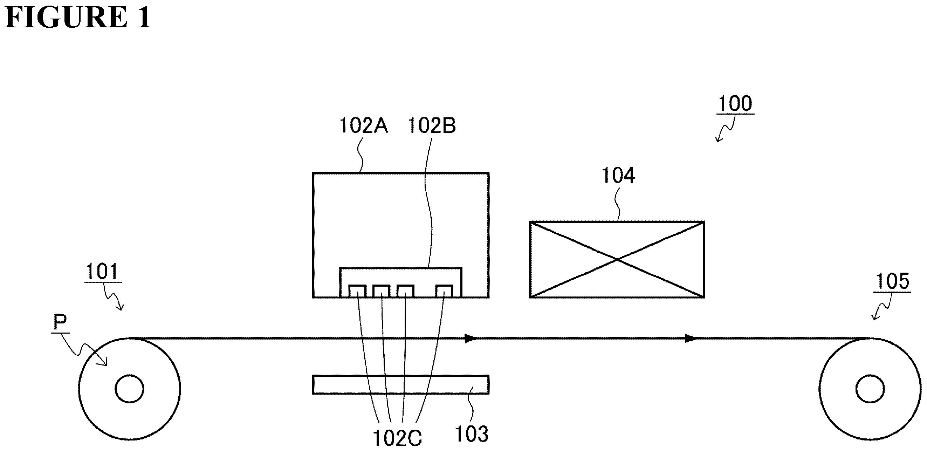

# FIGURE 1

EP 4 497 790 A2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023121708 A
- JP 2019147892 A
- JP H083498 A
- EP 0688836 A
- JP 2000513396 A
- US 5837045 A
- JP 2008524400 A
- US 2006201380 A
- JP 2009515007 A
- US 2007100023 A
- JP 2011515535 A
- US 2009229489 A